Europäisches Patentamt

European Patent Office

Office européen des brevets

(11) Publication number: 0 403 203 A2

# (12) EUROPEAN PATENT APPLICATION

(21) Application number: 90306337.8

(22) Date of filing: 11.06.90

(51) Int. Cl.5: H04Q 7/04, H04M 1/72, H04L 12/42

(30) Priority: 16.06.89 GB 8913931

(43) Date of publication of application:
19.12.90 Bulletin 90/51

(84) Designated Contracting States:
AT BE CH DE DK ES FR GB GR IT LI LU NL SE

(71) Applicant: FERRANTI CREDITPHONE LIMITED
St. Mary's Road
Moston, Manchester M10 OBE(GB)

(72) Inventor: Buisseret, Timothy J.
29 Bevill Square, St Stephens
Salford, Lancashire M3 6BB(GB)
Inventor: Pickin, John R.
Keeper's Cottages, Henshaw Lane,
Siddington
Macclesfield, Cheshire SK11 9JW(GB)

(74) Representative: Morton, Colin David et al
Keith W Nash & Co. Pearl Assurance House
90-92 Regent Street
Cambridge CB2 1DP(GB)

(54) Communication systems.

(57) A communication system fulfils the function of a private branch exchange (PBX) and includes a broad band highway in the form of an electrically conducting hard-wired loop (38). The loop (38) is capable of transmitting voice and data signals to a plurality of base stations (40, 42) around the loop, with each base station being capable of communicating by radio with terminal user equipment, such as portable handsets (16) in a cordless telephone system, facsimile machines, word processors or computers.

EP 0 403 203 A2

## Communication Systems

Field of the Invention

This invention relates to communication systems and aims to provide a new system which will fulfil the function of current private branch exchanges (PBXs), with the possibility of using cordless extension telephones.

A known cordless telephone system (so-called "telepoint" system) comprises a plurality of fixed base stations which are connected to the public switched telephone network (PSTN). Subscribers to the system have cordless telephones in the form of portable handsets which are capable of establishing radio communication with an in-range base station. The radio communication between the base stations and handsets may be in the form of analogue or digital modulation of a carrier. Each handset is accorded an identification number which, on recognition and acceptance by a base station, enables a call to be set up between the base station and the handset.

The handset for use on a telepoint system has the ability to make calls via a telepoint base station at public places. It is also equipped to make calls via a home base station. The home base station for outgoing calls will only respond to handsets which have previously been registered on the home base station. When a handset makes a call it sends its identity number to the home base station where the number is checked against a list of those handset identity numbers. For an incoming call the home base station broadcasts the identity number of the handset and the handset with that broadcast identity number responds. A neighbour's handset for example would not respond if it did not have the right identity number.

The ability of the base station to broadcast an identity number to which only the handset with that identity number responds represents a switching function. This switching function is taking place between the incoming telephone line to the base station and those handsets which are within range of the base station. For outgoing calls the base station will respond to any of the handsets within its range provided only that they are registered users of that base station.

It is possible using such cordless handsets and base stations to build a PBX which will provide a telephone service to a number of cordless handsets in the same manner in which a wired PBX provides a telephone service to a number of wired extensions. The invention relates to a particular form of interconnection of the base stations which makes full use of the inherent switching capability of the base stations and handsets outlined above.

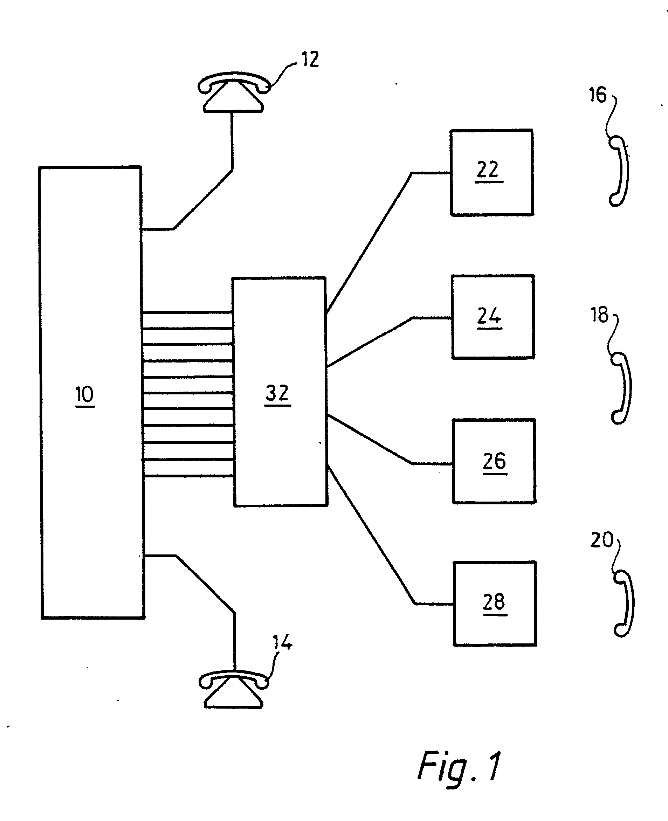

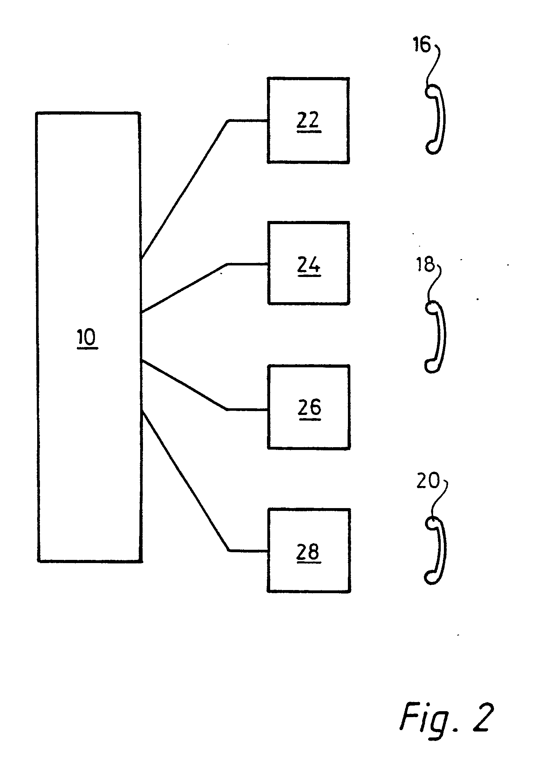

To assist in the understanding of the invention a number of alternative interconnection methods will be described, initially with reference to Figures 1 and 2 of the accompanying drawings. In Figure 1 is shown a conventional PBX 10 with two wired extensions 12, 14 and a number of cordless extensions, e.g. 16, 18, 20. For an outgoing call from handset number 16, for example, the user initiates the call and the base station 22 in whose service area the user happens to be receives the call and passes it to a Multiline Control Module (MCM) 32. Figure 1 shows further base stations 24, 26, 28... , the number of base stations being equal to the number of lines 30 interconnecting the PBX 10 and the MCM 32. The function of the MCM 32 is to recognise that it is handset number 16 that is wishing to make a call and then switching the call through to extension port 16. It is then dealt with in the PBX 10 in exactly the same manner as would a call from a wired extension. In the case of an incoming call for handset 16, this is switched by the PBX 10 to extension port 16 and passed through to the MCM 32. This then arranges for the identity number of handset 16 to be broadcast by each of the base stations 22, 24, 26, 28... in turn. Provided handset 16 is in one of the areas served by these base stations, then handset 16 will recognise that it is being called and will respond to the base station in whose area it is located. The call from the responding base station is then connected by the MCM 32 to extension port 16 on the PBX 10.

In the system described above no new function is required of the PBX 10. Such a system therefore can work with any PBX. The inherent switching function referred to above is implemented and then effectively cancelled by the MCM 32 in order that the integrity of the switching mechanism within the PBX 10 is preserved. This switching mechanism within the PBX is designed for a one to one correspondence between extension ports on the PBX and extension telephones connected to such ports.

A further example of how a cordless PBX can be implemented is shown in Figure 2. In this implementation the base stations 22, 24, 26, 28... are wired directly to the PBX 10 and the main functions of the MCM are carried out by the PBX 10. In this case the PBX 10 has to be specially designed to fulfil these extra functions.

The invention adopts an entirely different approach from that of Figures 1 and 2.

Summary of the Invention

According to the invention a communication system which fulfils the function of a private branch exchange (PBX) comprises a broad band highway in the form of a loop and capable of transmitting voice and/or data signals, and a plurality of base stations around the loop with each base station being capable of communicating by radio with terminal user equipment. The loop is preferably an electrically conducting hard-wired loop.

The terminal user equipment may be one or more portable handsets in a cordless telephone system, facsimile machines, word processors or computers.

The base stations may be of two kinds, a first kind for communicating voice signals by radio with portable handsets, and a second kind for communicating data signals by radio with facsimile machines, word processors, computers or the like.

The loop may include a roamer call monitor for enabling the system to accept telephone calls from portable handsets not registered on the base stations on the loop.

The loop may also include a line server which links the loop to the public switched telephone network (PSTN) through a plurality of connections, the line server directing incoming calls from the plurality of connections to respective channels on the broad band loop and directing outgoing calls from the channels on the loop to respective connections leading to the PSTN

The loop may also include a help desk unit to which are directed incoming calls devoid of information indicating the identity of the handset for which they are destined, the line server acting to route such incoming calls to all base stations so that the call is completed provided the called party is within the area covered by the base stations.

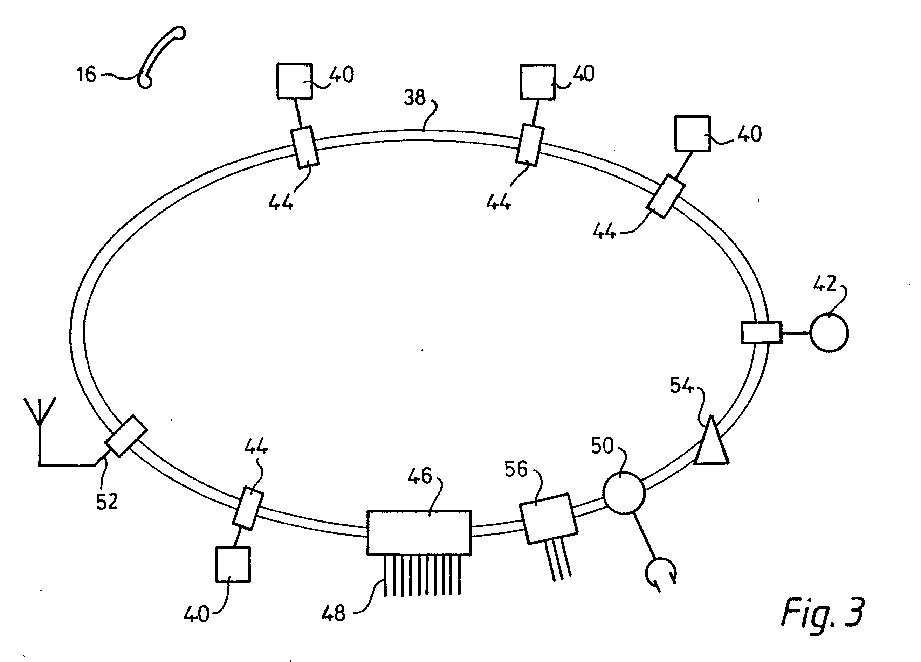

The invention will now be further described by way of example with reference to Figure 3 or the accompanying drawings.

Description of the Preferred Embodiment

In Figure 3 reference 38 represents a single broadband interconnecting loop highway to which all base stations are connected. The highway 38 could be a coaxial cable or a fibre optic cable. References 40 represent the base stations which are capable of a single voice channel of communication or capable of more than a single simultaneous voice channel. This would be dependent on the number of simultaneous voice communications it is desired to have within the radio range of the base station. A representative handset is illustrated at 16 and such handsets are capable of establishing radio communications with an in-range base station 40.

Reference 42 represents a base station dedicated to the radio transmission of data which would be carried by the same broadband interconnecting highway. For example, facsimile machines and word processors could be in radio communication with a base station 42. Offices will require such data highways and by employing radio for the last connection to such equipments as word processors facsimile machines and other data equipment the problems of resiting such equipment as the needs of the office change are avoided. The nature of data traffic is different from voice and the most efficient method of handling such data traffic is by a packet switch network. A single broadband connecting highway can support both voice traffic and a packet switch network without the two systems interacting.

Reference 44 represents the interface unit between the voice channels from the radio module and connection to the broadband highway. The broadband highway can have its information carrying capacity partitioned into a number of discrete channels. This can be by means of frequency carriers or by time division with a number of time slots or it can be by a mixture of both systems. The function of assigning particular voice links to the particular channels so subdividing is fulfilled by the units 44 which can be a function within the corresponding base stations.

Reference 46 represents a line server function for the incoming lines 48 from the public switched telephone network (PSTN). The line server 46 has the ability to interface incoming calls to one of the channels on the broadband interconnection. It also has the ability to connect outgoing calls which it receives from the broadband interconnection to one of the PSTN connections.

Reference 50 represents a help desk or operator position.

Incoming calls from the PSTN may or may not be accompanied by signal information indicating the number of the handset for which they are destined. In the event that they are not accompanied by such information the call will be referred to the help desk 50 and the calling party will give the name of the individual to whom the calling party wishes to speak. The operator then assigns to the incoming call the handset number for which the call is intended. The call is thereafter handled by the line server 46. The system will automatically try all base stations and provided the called party is within the area covered by the base stations the call will be completed.

Reference 52 represents a local area pager (LAP), having an antenna as indicated. The handset owner as described above can be reached for incoming calls by broadcasting the handset identity number from all base stations. The handset however, which is a personal possession carried by individuals, may well be equipped for receiving incoming calls by the inclusion within it of a wide area pager so that a signal can be received anywhere in the area covered by such a wide area paging system. It may be appropriate to use this paging function in a local mode of operation as a means of setting up an incoming call within the area served by the interconnected base stations described.

Reference 54 represents a Roamer Call Monitor (RCM). The main user of the system described above will be handset owners whose normal place of work is the premises covered by the interconnected base stations 40. The premises may however be visited by owners carrying handsets which are not registered on the interconnected base station system. Such handsets will be equipped with the ability to make calls on public telepoint systems. The function of RCM 54 will be to enable the system to accept telepoint calls. RCM 54 will recognise that a public call has been requested through its interface to the broadband interconnection, and will then check that the user is authorised to make a telepoint call in exactly the same way as a telepoint terminal. Having done this it will then authorise the connection to a PSTN line and will monitor and store such information as is necessary to determine the cost of the call. RCM 54 is also equipped with means of transmitting this cost information in response to an incoming call from the operator of the telepoint system.

Reference 56 represents a data gateway function for the transmission and receipt of data from national data systems such as the packet switch system (PSS).

## Claims

1. A communication system which fulfils the function of a private branch exchange (PBX), comprising a broad band highway in the form of a loop and capable of transmitting voice and/or data signals, and a plurality of base stations around the loop with each base station being capable of communicating by radio with terminal user equipment.

2. A communication system according to claim 1, wherein the loop is an electrically conducting hard-wired loop.

3. A communication system according to claim 1 or 2, wherein the teminal user equipment includes portable handsets in a cordless telephone system.

4. A communication system according to claim 3, wherein the terminal user equipment includes facsimile machines, word processors or computers.

5. A communication system according to claim 4, wherein the base stations are of two kinds, a first kind for communicating voice signals by radio with the portable handsets, and a second kind for communicating data signals by radio with the facsimile machines, word processors or computers.

6. A communication system according to any of claims 3 to 5, wherein the loop includes a roamer call monitor for enabling the system to accept telephone calls from portable handsets not registered on the base stations on the loop.

7. A communication system according to any of the preceding claims, wherein the loop also includes a line server which links the loop to the public switched telephone network (PSTN) through a plurality of connections, the line server directing incoming calls from the plurality of connections to respective channels on the broad band loop and directing outgoing calls from the channels on the loop to respective connections leading to the PSTN.

8. A communication system according to claim 7, wherein the loop also includes a help desk unit to which are directed incoming calls devoid of information indicating the identity of the handset for which they are destined, the line server acting to route such incoming calls to all base stations so that the call is completed provided the called party is within the area covered by the base stations.

*Fig.1*

Fig. 2

Fig. 3